# EUROPEAN PATENT APPLICATION

(11) **EP 4 210 175 A1**
(43) Date of publication of application: **12.07.2023**
(21) Application number: 22305019.6
(22) Date of filing: 11.01.2022
(51) Int. Cl.: H01R 13/00, B60L 53/16, B60L 58/26

(54) **CHARGING CABLE, CHARGING INTERFACE AND METHOD FOR CHARGING ELECTRIC CARS**

(71) Applicant: Nexans, 92400 Courbevoie (FR)
(72) Inventor: FENEIS, Michael, 92685 Floss (DE); STEINBERG, Helmut, 92685 Floss (DE)
(74) Representative: Ipsilon

(57) **Abstract**

A charging cable for an electric vehicle. The charging cable comprises at its free end (301) a charging plug (104) and electrical lines connecting the charging plug with a charging station. The electrical lines are in thermal contact with a cooling conduit. The cooling conduit is connectable at the free end of the charging cable with a fluid coupling (302a,302b) that is separate from the charging plug. Furthermore, a charging interface for accepting a charging plug of a charging cable is a suggested as well as a charging method for charging an electric car. The charging method is adapted for the use of liquid nitrogen as coolant for current carrying components.

## Description

### Field

The present disclosure relates to a charging cable, a charging interface, and a method for charging electric cars.

### Background

Electric vehicles are more and more common. Apart from their limited electric range, the time that is required to recharge their battery is one of the major disadvantages compared to conventional cars with combustion engines, which can be refueled in a few minutes. Consequently, there is a desire to reduce the required charging time by increasing the electric charging power. At present, charging voltages are as high as 500 V for realizing a charging power of 50 kW. For further increasing the charging power, charging currents beyond 100 A need to be employed which generate significant heat in the charging cable connectors and in the battery of the electric car.

DE 10 2016 117 261 B3 describes a charging system with a fluid cooled charging cable. The coolant flows through with the cable up to the contacts of the charging plug and returns in a closed circuit back to a charging station that is equipped with a refrigerator apparatus for cooling the coolant back. Each contact of the charging plug is connected with one coaxial line carrying the electric current and providing the ducts for the cooling circuit. The coolant is not transferred to the charged car for cooling components in the car that also heat up during the charging process.

DE 10 2010 007 975 A1 discloses charging station that is equipped with an integrated cooling apparatus. The charging station is connected with a charging cable and ducts for transporting coolant to the battery of the electric car. In one embodiment the charging cable and the ducts for the coolant form an integrated part. The electric lines and to the cooling conduits are connected with the car by means of a single integrated charging plug. One advantage of this approach is that the coolant also cools the charging cable and not only the battery in the car. In another embodiment of the charging station, compressed air is a used to cool of the battery by blowing the air over the battery. This cooling concept does not involve a closed-circuit. The embodiments that enable cooling the charging cable simultaneously with cooling the battery require an adapted charging plug.

Most electric cars in Europe are employed with so-called Type 2 plugs ("Mennekes" plug) for AC charging or CCS-Type 2 plugs for AC and DC charging. These plugs do not provide for couplings for a coolant.

In view of the limitations of existing charging systems, there remains a desire for equipment that is compatible with existing electric cars but enables at the same time faster charging than with conventional charging cables and plugs.

### Summary

According to a first aspect the present disclosure suggests a charging cable for an electric vehicle. The charging cable comprises at its free end a charging plug and electrical lines connecting the charging plug (104) with a charging station. The electrical lines are in thermal contact with a cooling conduit. The cooling conduit is connectable at the free end of the charging cable with a fluid coupling that is separate from the charging plug.

Due to the active cooling of the charging cable, it is possible to reduce the diameters of the electric lines inside the charging cable. The charging cable is less heavy and more flexible. At the same time material costs are reduced. The fluid coupling allows for connecting the fluid conduit to the corresponding fluid coupling at an electric car such that components inside the electric car can be cooled as well during fast charging. Since the fluid coupling is separate from the charging plug no change of standardized charging plugs is necessary. As a result, also conventional electric cars that cannot receive coolant for cooling current carrying components can be charged without any disadvantage with the charging cable proposed by the present disclosure.

Advantageously, the charging plug is a standardized charging plug, in particular a Type 2 or CCS charging plug. Thus, conventional electric cars are compatible with the suggested charging cable.

In a preferred embodiment the cooling conduit is configured to supply line for coolant. In this way, the charging cable enables transferring coolant to the connected electric car and cooling components of the electric car which heat up during fast charging. The cooling conduit is either part of a closed circuit for coolant or is a unidirectional supply line at the end of which the coolant escapes into the atmosphere. In either case effective cooling of components inside the charging cable and the electric car is performed. If the cooling conduit is a unidirectional supply line only, then the structure of the charging cable is simpler than compared with a closed circuit. At the same time the charging cable is easier to handle.

In a further advantageous embodiment, the charging cable comprises a first cooling conduit functioning as a supply line for coolant from the charging station and a second cooling conduit functioning as a return line to the charging station.

According to a second aspect of the present disclosure a charging interface for accepting a charging plug of a charging cable is a suggested. The charging interface comprises a charging socket accepting the charging plug and at least one fluid coupling spatially separated from the charging socket for receiving coolant. The charging interface is based on standardized charging sockets and charging plugs but at the same time provides for active cooling of current carrying components inside the electric car. The active cooling advantageously permits higher charging currents and thus reduces the time required for charging a battery of the electric car.

According to preferred embodiments each cooling conduit and its associated fluid coupling are adapted to conduct liquid nitrogen as coolant. Liquid nitrogen is a very effective coolant that can be produced easily at low costs. The handling of liquid nitrogen presents no particular difficulties and entails no risk of environmental hazards.

According to a third aspect of the present disclosure a method for charging an electric vehicle from a charging station is a suggested. The method comprises:
- establishing an electric connection and the fluid connection between the charging station and the electric car;
- transferring a charging current and liquid nitrogen through the charging cable from the charging station to the electric car;
- measuring temperatures of selected components of the electric car and/or the charging cable;
- signaling the measured temperatures to the charging station;
- controlling the level of the charging currents such that during charging of the electric car temperatures of the selected components do not exceed predefined threshold temperatures;
- terminating the transfer of liquid nitrogen prior to terminating the transfer of the charging current.

Terminating the supply of coolant prior to terminating the transfer of the charging current enables warming up the charging cable before it needs to be disconnected from the electric car. Especially when liquid nitrogen is used this coolant, the charging cable becomes very stiff when the full cooling power of the liquid nitrogen is applied. In this state, the resistance of the charging cable is advantageously reduced but at the same time the charging cable cannot be handled easily or even not at all. The warm-up phase towards the end of the charging process prevents any handling problems when the charging cable needs to be disconnected from the electric car.

According to a fourth aspect a charging station is suggested that provides, firstly, electric energy for charging an electric car and, secondly, liquid nitrogen as coolant for cooling current carrying components in a charging cable and/or the electric car. The charging station allows realizing the advantages that have already been mentioned in the context of the charging cable.

Advantageously, the charging station comprises a refrigerator apparatus for generating liquid nitrogen and a storage tank for storing the liquid nitrogen. The storage tank allows for supplying a lot of cooling power without the need to die mentioned the refrigerator apparatus to the maximum expected demand of coolant. Rather, the refrigerator apparatus continuously generates liquid nitrogen as coolant for storing it in the storage tank. From the storage tank the liquid nitrogen can be supplied in large quantities to satisfy even peak demands for instance when many people are traveling at the same time seeking for the fastest possible charging of their electric car.

Further advantages of the present disclosure will become apparent when reading the detailed description and the claims.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a charging station with an electric car connected to the charging station;
- Fig. 2: a charging cable with an integrated cooling coil forming a closed-circuit;
- Figs. 3A, 3B: a charging plug of a charging cable according to the present disclosure;
- Fig. 4: a socket for the charging plug shown in Fig. 2; and

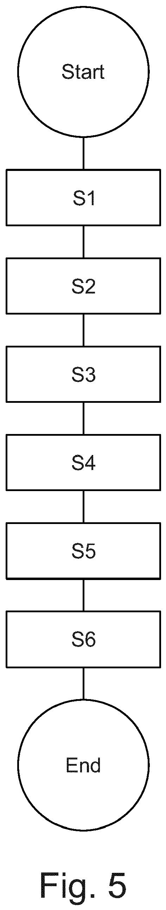

- Fig. 5: a schematic flow diagram of a method for charging an electric car according to the present disclosure.

In the figures the same or similar components are labelled with the same or similar reference signs.

### Detailed description

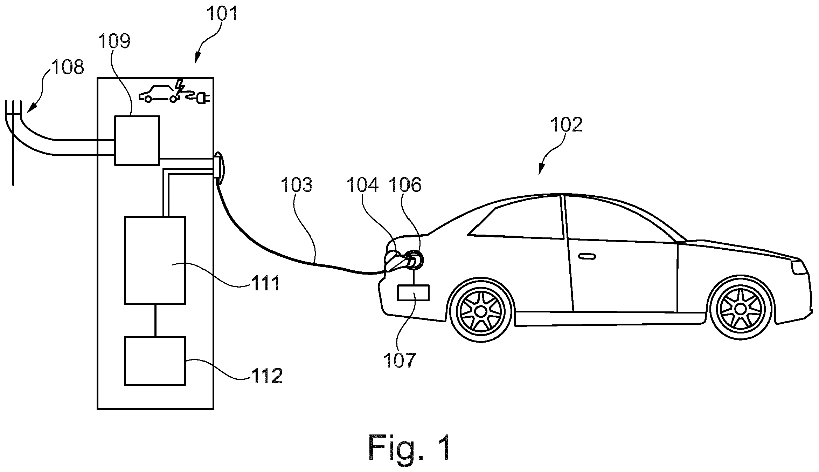

Figure 1 shows the charging station 101 and an electric car 102. A charging cable 103 is fixedly connected with the charging station 101 and couples the charging station with the electric car 102. At its free end the charging cable 103 is provided with a charging plug 104 plugged into a charging socket 106 of the electric car 102. The charging socket 106 is connected with a battery 107. It is noted that the electric car 103 is only an example for any kind of electric vehicle, for instance a bike, a van, the truck or even a boat.

The charging station 101 is connected to a public supply grid 108. An AC/DC converter 109 generates DC current for charging the electric car 102. A refrigerator apparatus 111 liquefies nitrogen from the atmosphere to supply it as coolant to the electric car 102 or to a cryogenic storage tank 112. The cryogenic storage tank 112 enables the charging station 101 to instantaneously provide very high cooling power. The cryogenic storage tank 112 can be dimensioned to satisfy the requested cooling power even in phases of high demand that significantly exceeds the amount of liquid nitrogen (LN2) that can continuously be generated by the refrigerator apparatus 111. Such high demand occurs for instance at the beginning of vacations when many people travel long distances and do not want to spend a lot of time at charging stations. Since LN2 can easily be stored in the cryogenic storage tank, the LN2 is preferably generated when there is an oversupply of electric energy supply grid.

The interface for the cable charging plug 104 is standardized. In Europe the plug 104 is most frequently a so-called Type 2 connector ("Mennekes" plug) for AC charging or a CCS connector (also known as Combo 2 connector) for either AC or DC charging. Fast charging normally is performed by DC charging because in this case the charging station 101 can provide high DC currents allowing charging a battery of the electric car 102 with a charging power in the range of 50 kW to 350 kW. Such high charging power is linked with high currents that entail significant ohmic losses generating corresponding heating in the charging cable, the contacts of the charging plug and socket as well as in the cables inside the electric car connecting the charging socket 106 with the battery. For avoiding excessive heating of components during fast charging of the electric car, there are in principle two options. A first option is to increase the diameter of the cable conductors and contacts. A second option is to actively cool the cable conductors and contacts. In addition to that it may also be necessary to cool the battery during fast charging.

A disadvantage of the first option is that the charging cable becomes bulky and is not easy to handle. In addition to that, conductor material with the low ohmic resistance, such as copper, is expensive as well as the additional amount of insulating material that is needed for thicker cables. Larger cable diameters inside a vehicle increase the weight of the vehicle, which is undesirable as well. For these reasons active cooling of components which are subject to ohmic heating during fast charging is superior regarding the mentioned aspects.

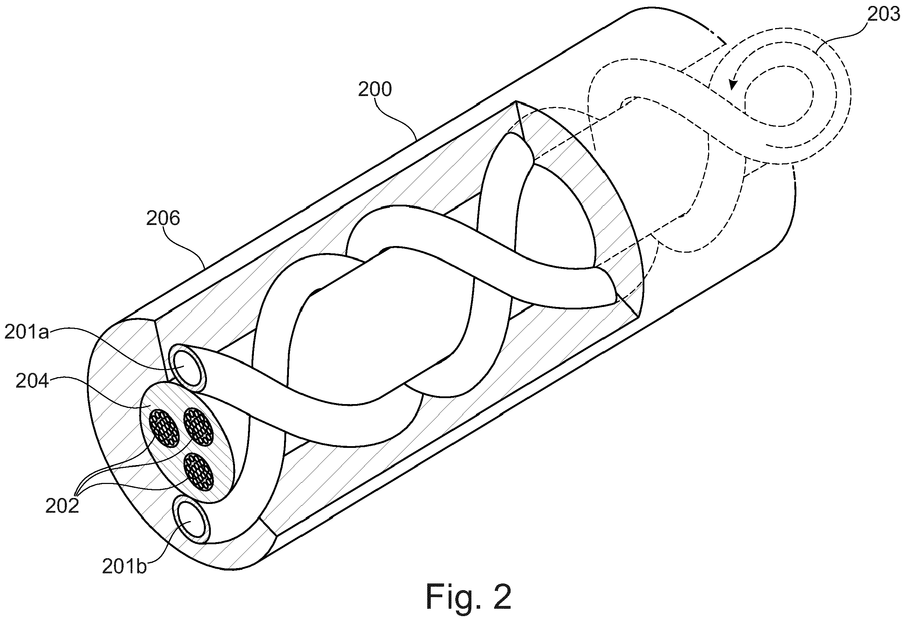

Figure 2 displays an embodiment of charging cable 103 which is labelled with reference number 200 in Figure 2. The charging cable 200 comprises integrated cooling conduits 201a, 201b, which are helically wound around three electric lines 202 inside the charging cable 200. The electric lines 202 are in thermal contact with the cooling conduits 201a,201b for cooling purposes. The charging station 101 feeds recooled coolant into the cooling conduit 201a. The coolant returns to the charging station 101 through the cooling conduit 201b establishing a closed circuit for the coolant which is symbolized by arrow 203. The electric lines 202 are embedded into an inner sheath 204. An outer sheath 206 encloses the electric lines 202 and cooling conduits 201a, 201b providing electric and thermal insulation as well as mechanical protection.

But if the active cooling shall not be limited to the charging cable 200, then the charging plug must also enable transfer of coolant from the charging station 101 to the electric car 102. However, charging plugs that meet this requirement are not compatible with standardized Type 2 and CCS charging plugs most widely used in Europe.

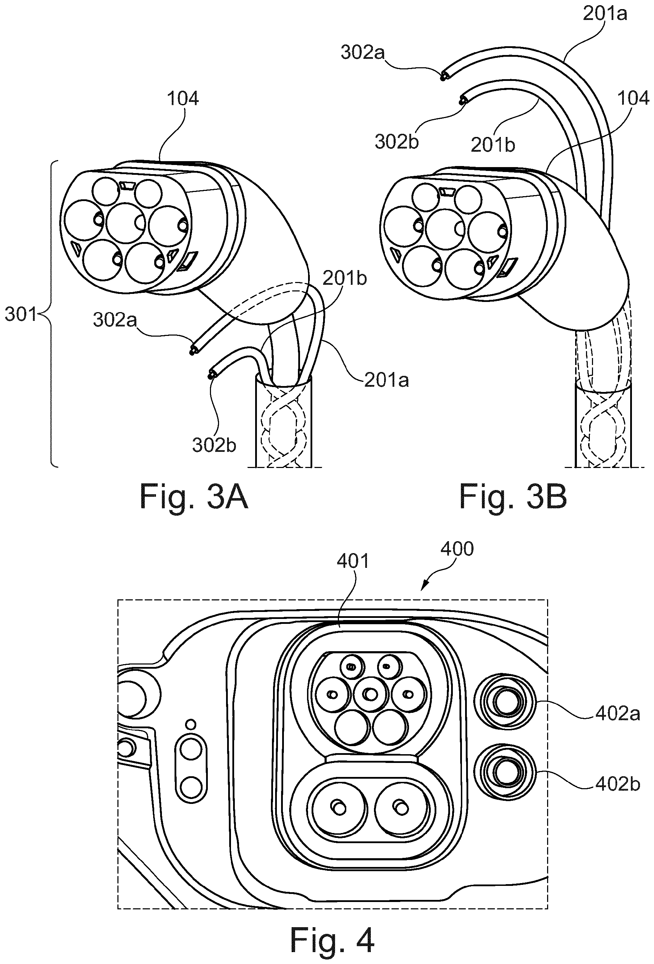

Figure 3A shows a free end 301 of the charging cable 200 comprising a conventional plug 104. The plug 104 is connected with the electrical lines 202 inside the cable 200. The cooling conduits 201a, 201b are exiting from the outer sheath 206 of the charging cable 200 and are provided with hose couplings 302a, 302b enabling a fluid-tight connection for coolant to be circulated inside the electric car 102. The hose couplings 302a, 302b are closed unless connected with the corresponding counterpart preventing unintentional is capable of coolant. In the embodiment shown in Figure 3A the plug 104 itself is not cooled which may present a limitation for the charging currents that can be transferred through the plug 104. This problem is addressed by a charging cable shown in Figure 3B.

Figure 3B displays a further improved charging cable 200. The cooling conduits 201a, 201b enter jointly with the electric lines into the plug 104. The cooling conduits 201a, 201b supply coolant to the plug 104 and the contacts of the plug 104. To this end, the charging plug 104 is provided with cooling channels that are not shown in Figure 3B. Finally, the cooling conduits 201a, 201b exit from the plug and are closed at their ends with hose couplings 302a, 302b. In this way effective cooling of the charging plug 104 can be achieved. It is important to note that the plugs 104 shown in Figures 3A and 3B are compatible with any charging socket of an electric car that accepts the Type 2 plug of a charging cable. It is noted that the Type 2 charging plug is only a representative example of any other type of standardized charging plug.

In order to transfer coolant from a charging station 101 to an electric car 102 through the charging cable 103 according to the present disclosure, it is sufficient to equip the electric car 102 with hose couplings accepting the hose couplings 302a, 302b of the cooling conduits 201a, 201b. Figure 4 shows a charging interface 400 of the electric car 102 comprising a CCS charging socket 401 and hose couplings 402a, 402b. The hose couplings 402a, 402b are in fluid connection with internal cooling conduits inside the electric car 102 cooling the electric lines connecting the charging socket 401 with a battery inside the electric car 102. In one embodiment the internal cooling conduits also cool parts of the battery that tend to heat up during fast charging.

It is emphasized that the charging cable 200 of the present disclosure can be used in combination with legacy electric cars which are not equipped with hose couplings 402a,402b. Since the hose couplings 302a, 302b remain to be close, the charging cable functions as a conventional charging cable without cooling functionality. However, in one embodiment the hose couplings 302a, 302b are connected with a connection piece enabling the closed cooling circuit within the charging cable 200. This approach allows reduced diameters of the electric lines 202 inside the charging cable 200 without compromising the magnitude of the charging current.

In a further embodiment the electric lines inside the electric car have a tubular structure enabling the coolant to flow inside the electric lines. In this way a particularly efficient cooling can be achieved.

In one embodiment LN2 is transferred as coolant through the charging cable 103 to the electric car 102 enabling very efficient cooling of all current carrying components that tend to heat up during fast charging. The cooling capacity of LN2 is so big that the cooled components can be cooled down to temperatures way below ambient temperature in spite of the ohmic heating by the charging current. Low temperatures are advantageous because the resistance of the current carrying components normally decreases with decreasing temperatures. However, at low temperatures the charging cable 103 may become very stiff making it impossible to disconnect the charging cable 103 from the electric car 102. For this reason, a new charging method is proposed.

After the electric and fluid connections between the charging station 101 and the electric car 102 have been established (step S1) by means of the charging cable 103, a charging current and LN2 flows through the charging cable 103 to the electric car (step S2). Specifically, the charging current flows through the electric lines 202 inside the charging cable 103 from the charging station to a battery of the electric car 102. The LN2 flows inside cooling conduits to cool down current carrying components in the charging cable and in the electric car. Temperature sensors measure temperatures of selected components of the electric car 102 and/or the charging cable 103 (step S3). Selected components are for instance the electric lines 202 of the charging cable 103, electrical contacts in the charging plug 104 and/or in the charging socket 401, electric lines connecting the charging socket 106 with the battery of the electric car, contacts at the battery and the battery itself to name only a few examples.

The measured temperatures of the selected components are signaled to the charging station (step S4). In response, the charging station 101 controls the level of the charging currents such that during charging temperatures of the selected components do not exceed predefined threshold temperatures (step S5). The transfer of LN2 is terminated before a charging level of the battery approaches a preset charging level (step S6). That means, the transfer of LN2 is terminated prior to the transfer of the charging current. For example, the driver of the electric car 102 may decide that the charging level of 60% of the battery is sufficient to reach his destination. In this case the transfer of LN2 is terminated when the charging level of the battery has reached for instance 55%. Since the charging current continues to flow through the charging cable 103 until the charging level of the battery has reached 60%, the charging cable 103 is heated up by ohmic losses inside the charging cable. Thus, the charging cable 103 reaches temperatures at or above ambient temperatures when the charging of the battery is finished. As a result, the charging cable is flexible again and can easily be disconnected from the electric car 102. The same concept is applied to when the battery is fully charged, i.e. the transfer of LN2 is terminated when the battery charging level has reached e.g. 90% of the fully charged level. Of course, the mentioned charging levels are only examples and may be adapted in each specific application to achieve the goal of warming up the charging cable at the end of the charging process.

In a further embodiment the cooling conduits inside the charging cable 103 and the internal cooling conduits inside the electric car 100 to provide for an open circuit instead of a closed circuit described above. That means the LN2 flows unidirectional from the charging station 101 to the electric car 102 where it escapes into the environment. This embodiment requires less expenditures for the cooling conduits, the charging cable 103 becomes less bulky and on the side of the electric car 102 weight can be saved. Of course, a charging cable 200 provided with a supply cooling conduit 201a and a return cooling conduit 201b can be used in combination with an electric car offering only an open cooling circuit with a single hose coupling 402a. In this case the hose couplings 302b of the cooling conduit 201b remains to be closed.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 101: charging station
- 102: electric car
- 103: charging cable
- 104: charging plug
- 106: charging socket
- 107: battery
- 108: supply grid
- 109: AC/DC converter
- 111: refrigerator apparatus
- 112: cryogenic storage tank

- 201a,201b: cooling conduit
- 202: electric line
- 203: arrow
- 204: inner sheath
- 206: outer sheath

- 301: free end of charging cable
- 302a, 302b: hose couplings

- 400: charging interface
- 401: charging socket
- 402a,402b: hose couplings

## Claims

1. Charging cable for an electric vehicle(102), wherein the charging cable (103,200) comprises at its free end (301) a charging plug (104) and electrical lines (202) connecting the charging plug (104) with a charging station (101), wherein the electrical lines (202) are in thermal contact with a cooling conduit (201a,201b), **characterized in that** the cooling conduit (201a,201b) is connectable at the free end of the charging cable with a fluid coupling (302a,302b) that is separate from the charging plug (104).

2. Charging cable according to claim 1, wherein the charging plug (104) is a standardized charging plug, in particular a Type 2 or CCS charging plug.

3. Charging cable according to claims 1 or 2, wherein the cooling conduit (201a,201b) is configured to supply line for a coolant.

4. Charging cable according to one of the preceding claims, wherein the charging cable (103) comprises a first cooling conduit (201a) functioning as a supply line for coolant from the charging station and a second cooling conduit (201b) functioning as a return line to the charging station (101).

5. Interface for accepting a charging plug of a charging cable, **characterized in that** the charging interface (400) comprises a charging socket (401) accepting the charging plug (104) and at least one fluid coupling spatially separated from the charging socket for (401) receiving coolant.

6. Charging cable or interface according to one of the preceding claims, wherein each cooling conduit (201a,201b) and its associated fluid coupling (302a,302b) are adapted to conduct liquid nitrogen as coolant.

7. Method for charging an electric vehicle (102) from a charging station (101), wherein the method comprises:
- establishing (step S1) an electric connection and the fluid connection between the charging station and the electric vehicle (102);
- transferring (step S2) a charging current and liquid nitrogen through the charging cable (103) from the charging station to the electric car;
- measuring (step S3) temperatures of selected components of the electric car and/or the charging cable;
- signaling (step S4) the measured temperatures to the charging station (101);
- controlling (step S5) the level of the charging currents such that during charging of the electric car (102) temperatures of the selected components do not exceed predefined threshold temperatures;
- terminating (step S6) the transfer of liquid nitrogen prior to terminating the transfer of the charging current.

8. Charging station providing electric energy for charging an electric car (102) and for providing liquid nitrogen as coolant for cooling current carrying components in a charging cable (103) and/or the electric car.

9. Charging station according to claim 8, wherein the charging station (101) comprises a refrigerator apparatus (111) for generating liquid nitrogen and a storage tank (112) for storing the liquid nitrogen.
